# EUROPEAN PATENT APPLICATION

(11) **EP 2 403 178 A1**
(43) Date of publication of application: **04.01.2012**
(21) Application number: 09840615.0
(22) Date of filing: 24.02.2009
(51) Int. Cl.: H04L 1/08

(54) **A METHOD, BASE STATION AND RELAY STATION FOR PERFORMING AN ARQ PROCESS IN A RELAY BASED SYSTEM**

(71) Applicant: Alcatel Lucent, 75008 Paris (FR)
(72) Inventor: YANG, Tao, Shanghai 201206 (CN); FANIUOLO, Antonella, Shanghai 201206 (CN)
(74) Representative: 2SPL Patentanwälte
(86) International application number: PCT/CN2009/000195
(87) International publication number: WO 2010/096947

(57) **Abstract**

A method, in a relay-based wireless communication system, for performing downlink ARQ process, is proposed according to the invention. The method comprises: the BS sends first data to the RS, the first data multiplexing second data for one or more terminal equipments; if the transmission of the first data fails, unsolicited ARQ process to the RS is triggered by the BS, so as to perform the retransmission of the first data; the RS demultiplexs the first data transmitted from the BS to generate the second data, and sends the demultiplexed second data to the terminal equipment; if the transmission of the second data fails, the unsolicited ARQ process to the terminal equipment is triggered by the RS, so as to perform the retransmission for the second data; and the terminal equipment receives the second data and triggers a passive ARQ process for the reception of the second data.

## Description

### Technical field

The invention relates to wireless communications, and more specifically relates to a method of performing downlink ARQ (automatic repeat request) process in relay-based wireless communication system, being able to reduce the delay in the execution of ARQ process and reduce the status report transmissions on the Uu interface.

### Background of the arts

The Relay concept is proposed as a candidate for 3GPP LTE (3rd Generation Partnership Project Long Time Evaluation)-advanced system. Relay introduced by more than one hop transmission should be resolved, in order to target 3GPP LTE-A relay requirement. It is foreseen that DL (downlink) asynchronous HARQ (Hybrid Automatic Repeat reQuest) will be used for 3GPP LTE-advanced system for the backward compatibility.

The current Relay concept is already used in IEEE.

There are three kinds of ARQ mechanism disclosed in current 802.16j/D4: end-to-end, two-link and hop by hop. End-to-end ARQ mechanism is similar to no Relay node case, the ARQ procedure is based on the status report from the receiving side(Rx), this may lead to big delay due to the introduction of relay station(RS). In the two-link ARQ process, seperating the ARQ procedure into two steps: ARQ between BS (NodeB) and access relay station (ARS) and ARQ between ARS and user terminal equipment(UE). The common character of these two steps is that the receiving (Rx) side triggers the ARQ retransmission by status report. In detail, for the first step, the ARS performs the re-ordering process to locate the lost PDU (protocol data unit) and sends status report to BS to perform ARQ retransmission. In the second step, the UE detects the lost PDU also by re-ordering process and sends status report to ARS, and that ARS performs the ARQ retransmission. It is clear that there is big delay due to the two-stage re-ordering process in ARS and UE. In addition, there is large status report transmission over the Uu interface originating from ARS and UE respectively. In the hop by hop ARQ process, each RS and UE will perform the re-ordering process to locate the lost data, and ARQ retransmission is asked for by its super station according to the status report, and this leads to very big delay and very large status report transmission over the Uu interface.

It has been proposed that relay based 3GPP system with two hops is mandatory, and has higher priority, so in this case the present invention discusses and proposes a new ARQ mechanism for two-hop 3GPP relay based system, wherein it takes into account characters of 3GPP system and is also able to be applied to more hops scenario. The purpose of present invention is to decrease the transmission of status report over the Uu interface, to accelerate the ARQ retransmission to short the delay and to simplify the ARS operation and etc.

Till now, three ARQ mechanisms for relay based system disclosed by standard 802.16j/D4 are hop by hop, two-link and end-to-end. Since the hop by hop and two-link ARQ mechanisms are similar, the following only discuss two-link and end-to-end ARQ mechanisms to list their disadvantages.

### 1) Two-Link ARQ mechanism

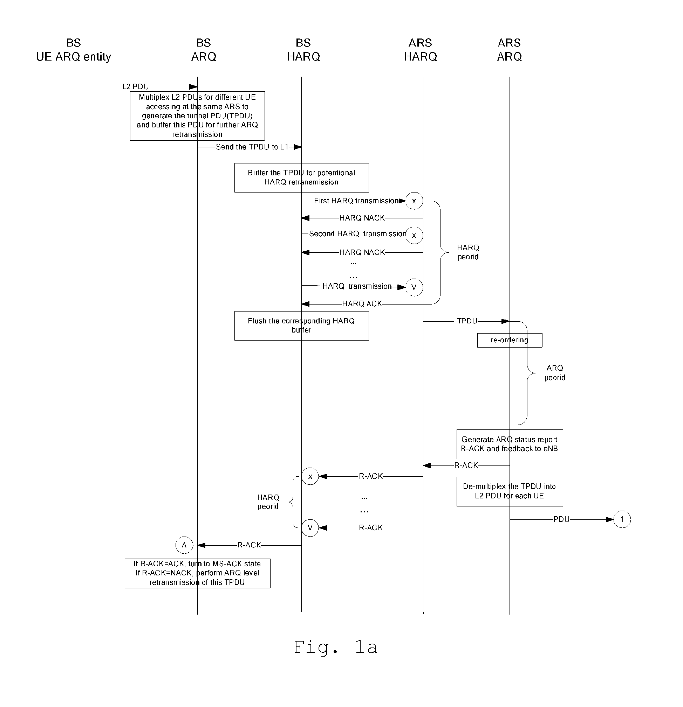

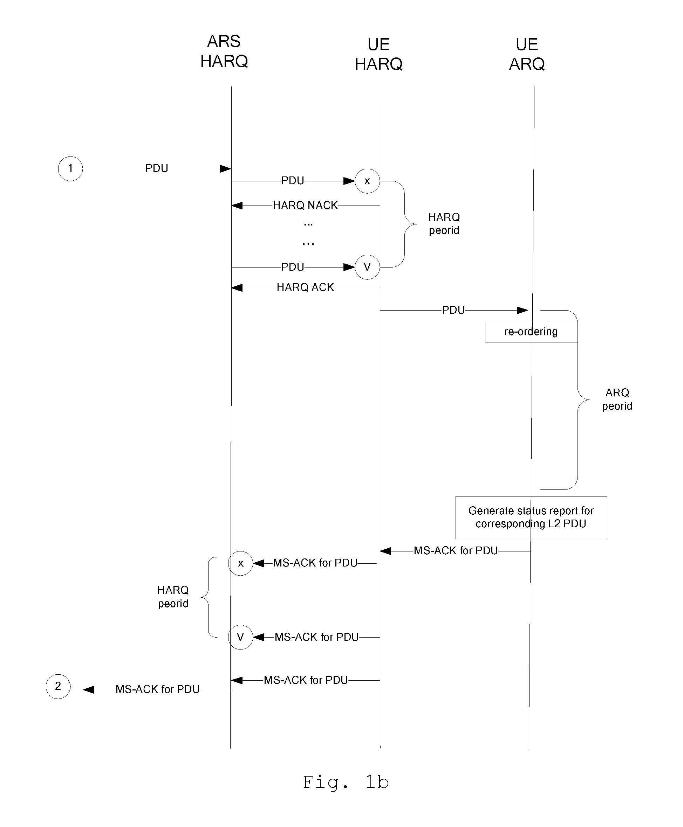

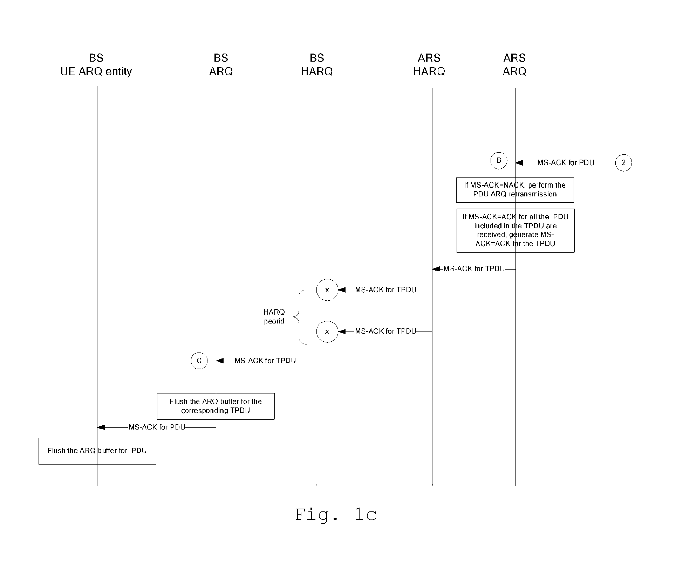

In two-link ARQ mechanism, the ARQ process are separated into two steps: ARQ process between BS and ARS based on the tunnel PDU (TPDU), triggered by receiver (that is, ARS), and the ARQ process between ARS and UE triggered by UE. The TPDU may comprise the data for more than one UE accessing at the same ARS. The general description of this two-link ARQ mechanism is shown in figures from Fig.1a to Fig.1c, wherein assuming DL asynchronous HARQ will be adopted.

It is clear that the earliest ARQ retransmission between BS and ARS is at point A, and it suffers from the ARS re-ordering process for locating the missing TPDU and from the HARQ process for status transmission. These two processes delay the possible ARQ retransmission between them. The TPDU can't be de-multiplexed before the re-ordering process is finished, hence postpones forwarding the corresponding packet to each involved UE. Similarly, the earliest possible ARQ retransmission between ARS and UE is at point B. The UE re-ordering and the HARQ process used for status report transmission contribute a lot to the delay of the potential ARQ retransmission between them.

The second drawback of this solution is the excessive status report transmission over the Uu interface due to the two steps of ARQ retransmission, which wastes the valuable radio resource.

The third drawback is that since the ARQ between BS and ARS is based on the TPDU, which means extra SN (serial number) should be applied to each TPDU to perform ARS re-ordering process. This extra SN leads to unnecessary UP (user plane) header overhead over the Uu interface.

### 2) End-to-End ARQ mechanism

This mechanism is same as the no RS scenario where the ARQ process is triggered by MS (end user), and this is certainly not the best, since the benefits of the RS have not been taken into account. Since all the ARQ retransmission should be located firstly by UE and then performed by BS, due to the forwarding by RS, larger delay will be introduced compared to the no RS case.

According to aforementioned proposal, new ARQ mechanism must be designed for relay-based 3GPP system to solve the following issues:
*shorten the delay
*decrease the status report transmission over the Uu interface
*avoid extra SN in TPDU header to avoid the header overhead
*UE must have the mechanism to ask for the retransmission of the data which is lost by ARS but still buffered at BS, to avoid extra application layer retransmission.

Hence, it should standardize the corresponding ARQ process in 3GPP related specification, for example, in RLC (radio link control) layer specification.

### Summary of the invention

To solve the above issues raised in the existing technology, the present invention is proposed. Therefore, the purpose of the present invention is to propose a method performing downlink ARQ process in relay-based wireless communication system, which can reduce the delay in the execution of ARQ process and reduce the transmission of status report on the Uu interface.

To achieve the aforementioned goals, according to present invention, it is proposed a method, in relay-based wireless communication system, of performing downlink automatic request retransmission ARQ process, comprising: BS sends a first data to the RS, the first data multiplexing second data for one or more terminal equipments; if the transmission of the first data fails, unsolicited ARQ process to the RS is triggered by the BS, so as to perform the retransmission of the first data; the RS demultiplexs the first data transmitted from the BS to generate the second data, and sends the demultiplexed second data to the terminal equipment; if the transmission of second data fails, unsolicited ARQ process to the terminal equipment is triggered by the RS, so as to perform the retransmission of the second data; and the terminal equipment receives the second data and triggers a passive ARQ process for the reception of the second data. Preferably, the first data is tunnel protocol data unit TPDU, the second data is link layer protocol data unit L2 PDU.

Preferably, the transmission of the first data fails is based on the final NACK feed back from the RS for the HARQ process between the BS and the RS or based on instructions from higher layer; and the transmission of the second data fails is based on the final NACK feed back from the terminal equipment for the HARQ process between the RS and the terminal equipment or based on instructions from higher layer. Preferably, said passive ARQ process comprises: the terminal equipment performs the reordering process for the second data received, to locate lost second data; the terminal equipment produces status report indicating the lost second data according to the reordering process; and the terminal equipment feeds back the status report to the RS.

Preferably, said passive ARQ process further comprises: The RS retransmits the second data, lost in the terminal equipment, that is buffered in the RS, according to the status report received from the terminal equipment; and for the second data, lost in the terminal equipment, that is not buffered in the RS, the RS generates a new status report according to the status report received from the terminal equipment, to indicate the BS to retransmit the second data, lost in the terminal equipment, that is not buffered in the RS.

Preferably, said passive ARQ process further comprises: the BS retransmits the second data, lost in the terminal equipment, that is not buffered in that RS, according to the new status report received from the RS.

In addition, according to the present invention, it is further proposed a BS in a relay-based wireless communication system, comprising: means for sending, used for sending first data to the RS, the first data multiplexes second data for one or more terminal equipments; means for handling unsolicited ARQ process, used for triggering the unsolicited ARQ process to the RS, to perform the retransmission of the first data, if the transmission of the first data fails; means for receiving, used for receiving status report sent from the RS for the passive ARQ process triggered by terminal equipment for the reception of the second data, wherein the status report indicates the second data, lost in the terminal equipment, that is not buffered in the RS; and means for handling passive ARQ process, used for retransmitting the second data, lost in terminal equipment, that is not buffered in RS, according to the status report received from the RS.

In addition, according to present invention, it is further proposed a RS in a relay-based wireless communication system, comprising: means for receiving, used for receiving first data from the BS, the first data multiplexing second data for one or more terminal equipments, and used for receiving from the terminal equipment the status report indicating the lost second data, for the passive ARQ process triggered by terminal equipment for the reception of the second data; means for demultiplexing, used for demultiplexing the first data sent from the BS to generate the second data; means for sending, used for sending the demultiplexed second data to the terminal equipment; means for handling unsolicited ARQ process, used for triggering the unsolicited ARQ process to the terminal station to perform the retransmission of the second data, if the transmission of the second data fails; and means for handling passive ARQ process, used for retransmitting the second data, lost in terminal equipment, that is buffered in the RS, according to the status report received from the terminal equipment.

Preferably, the RS according to the present invention further comprises: means for updating status report, used for generating a new status report according to the status report received from terminal equipment for the second data, lost in the terminal equipment, that is not buffered in that RS, to indicate the BS to retransmit the second data, lost in the terminal equipment, that is not buffered in the RS. According to the present invention, it is further proposed a wireless communication system comprising the aforementioned BS and RS.

### Brief description of the drawings

The aforementioned purposes, advantages and features of present invention become apparent, by referring to the following detailed description of preferred embodiment in connection with the figures.
Fig. 1a to Fig. 1c are the general descriptions of the Two-Link ARQ mechanism based on existing technology.
Fig. 2 is the possible DL L2 (layer 2) user plane architecture for relay-based 3GPP system.
Fig. 3 is the diagram of the method, which performs the Down-Link ARQ process in relay-based wireless communication system, according to present invention.
Fig. 4a to Fig. 4c are the schematic time sequence diagrams of the method, which performs the Down-Link ARQ process in relay-based wireless communication system, according to one embodiment of present invention;
Fig. 5 is the schematic diagram of the state machine for performing the Down-Link ARQ process in relay-based wireless communication system, according to present invention; and
Fig. 6 is the structure diagram of the BS in a relay-based wireless communication system, according to present invention; and
Fig. 7 is the structure diagram of the RS in a relay-based wireless communication system, according to present invention.

### Detailed embodiment of the invention

The method which performs the Down-Link ARQ process in a relay-based wireless communication system, according to present invention, is able to be implemented in the corresponding 3GPP specification of LTE-advanced. The idea of present innovation mainly comprises the following several points:
1) The unsolicited ARQ process is triggered by the transmitter, not the receiver;
   BS (eNode B) automatically triggers the unsolicited ARQ process between the BS and ARS, after the corresponding L1 (Layer 1) transmission fails; ARS do not perform the re-ordering process which is to locate the lost TPDU, each TPDU does not have SN to save header overhead;
   ARS is simply operating, it only de-multiplexes TPDU to L2 PDU, and immediately forwards them to the corresponding UE. This helps to reduce the delay caused by RS forwarding.
   For ARQ process, there is no status report from the ARS, in order to avoid waste of resources.
   The ARQ retransmission is triggered by the transmitter, not the receiver, and the fast ARQ retransmission reduces the latency.
2) ARS automatically triggers the unsolicited ARQ process between the ARS and the UE, after the corresponding L1 transmission fails; and fast ARQ retransmission reduces the latency.
3) Passive ARQ retransmission triggered by UE is to solve the residual error caused by the unsolicited ARQ process;
   UE produces the status reports which indicate the lost L2 PDU, after the re-ordering process, and sends them to ARS;
   "small" status reports help to reduce the waste of resources on the Uu interfaces;
   ARS receives the status report from UE, if the corresponding L2 PDU is buffered at the ARS, then performs the passive ARQ retransmission; otherwise, ARS re-generates new status report to indicate the BS to performs the retransmission of the remaining lost L2 PDU;
   The BS performs the ARQ retransmission for the corresponding L2 PDU, which can not be solved by the unsolicited ARQ process, after receiving the status report from the ARS;
   ARS and BS flushes the packet correctly received by the UE in each buffer.

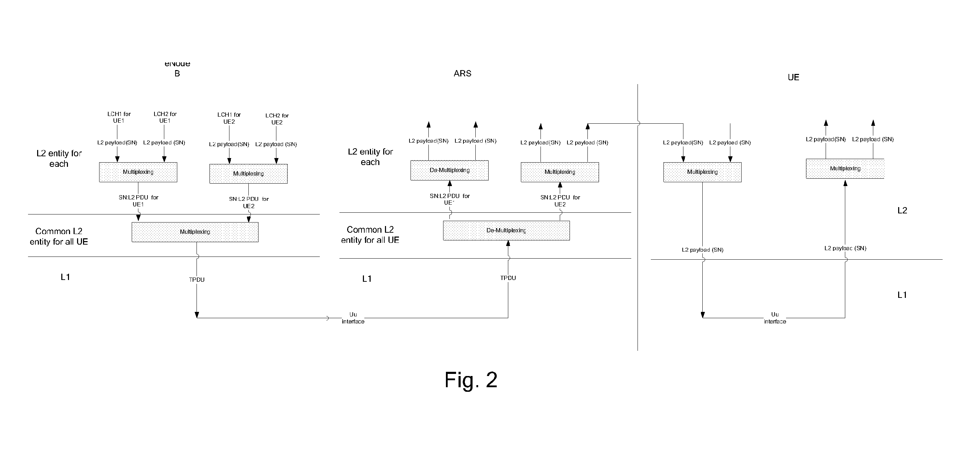

According to the standard 802.1 6j/D4, the possible plane structure diagram of the DL user in relay-based 3GPP system is shown in Fig. 2.

In Fig. 2, the data of multiple UE which access to the same ARS can be multiplexed to one TPDU, which goes to the ARS, then that ARS demultiplexes this TPDU into the original L2 PDU and forwards them to the corresponding UEs.

Performing encryption process in the L2, and attach a SN to each L2 PDU, used for that purpose, according to current 3GPP user plane data process. Do not need to do like the current 802.1 6j/D4, which attaches an extra TSN to each TPDU. This helps to reduce the header overhead on the Uu interface. In 3GPP, how to save the header overhead is a very important subj ect, and in the LTE standardization process there is intense discussion thereon. Therefore, no SN for each TPDU is very useful for subsequent LTE-A 3GPP system.

The ARQ process according to present invention can be divided into two parts:
The Unsolicited ARQ process, triggered by the transmitter rather than the receiver between BS and ARS, and between ARS and the UE;
The passive ARQ process, triggered by UE.

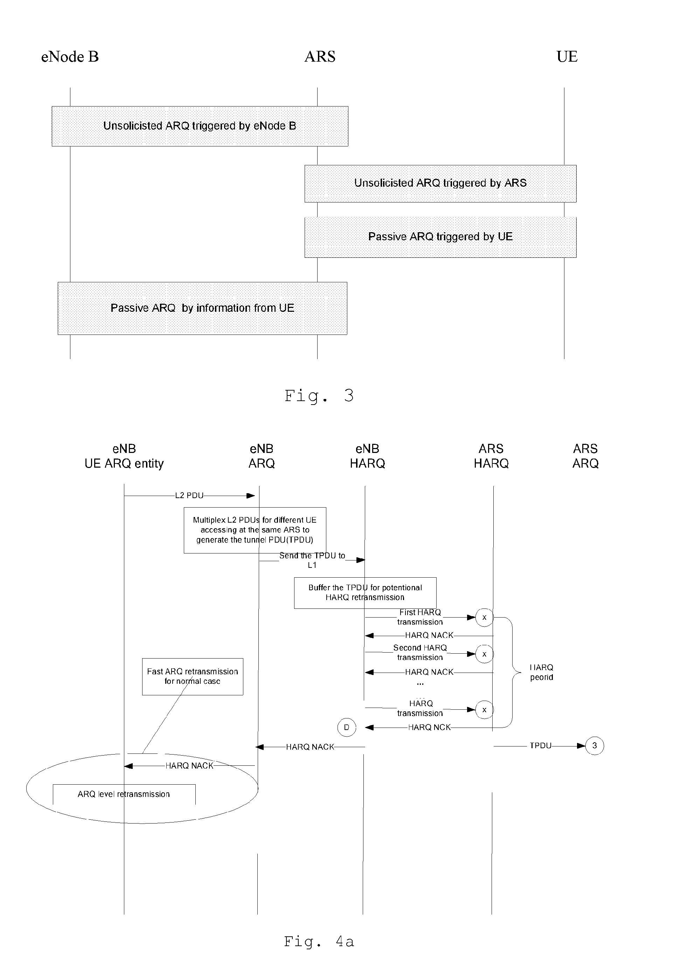

Fig. 3 describes the general concept of two stage ARQ process, and the following gives detailed description.

### 1. Unsolicited ARQ process between BS and ARS, triggered by BS

The BS records the contents of each TPDU, when forwarding them to the ARS. If the corresponding TPDU L1 transmission fails, the BS knows that the ARS loses all the L2 PDU contained in TPDU. This can be based on indication from high level to give up the L1 transmission due to special policy or by L1 indication, for example, for the final HARQ retransmitted HARQ NACK (the transmission still fails after several HARQ retransmission, caused by such as link quality deterioration). As a result, the BS can automatically start the corresponding L2 PDU ARQ stage retransmission to the ARS, without waiting for a status report from the ARS. At this time, the so-called unsolicited ARQ L2 PDU retransmission triggered by the BS side, rather than by the ARS status report, leads to fast ARQ retransmission between the BS and ARS. This fast ARQ retransmission has two facts: 1) The ARQ retransmission is triggered at the transmitter side, by L1 transmission failure indication (such as by HARQ NACK or other indication from higher layer), rather than triggered at the receiving side, by the status report from ARQ after re-ordering process. 2) The status report is L2 signaling which suffers from the delay due to its HARQ retransmission. This kind of delay does not occur in the proposed unsolicited ARQ mechanism.

Another advantage of the unsolicited ARQ retransmission triggered by BS is that no status report is required from the ARS, thus the waste of valuable wireless resources on Uu interface due to the transmission of status reports is reduced. Due to the unsolicited ARQ mechanism, there are still some residual errors. For example, the special strategy that give up the transmission of L1, can not prevent the further retransmission of L2 PDU involved by these residual errors in the future. In addition, the L1 signaling errors such as NACK→ACK error (the probability is about 10e-3) can lead to residual errors, since that signaling error will stop the proposed unsolicited ARQ retransmission which is involved with L2 PDU. ARS will lose the corresponding L2 PDU, since ARS is not able to detect these types of errors. This can be solved by the status reports from the UE side described below.

### 2. Unsolicited ARQ process between ARS and UE, triggered by ARS

As aforementioned, the ARS forwards that L2 PDU to the corresponding UE, without having the re-ordering process, due to that ARS does not need to locate the lost TPDU. And this helps to reduce the end to end delay.

Similarly, if the L1 transmission fails (for example, the L1 signaling HARQ NACK of each L2 PDU for that final HARQ retransmission), the ARS will automatically trigger the corresponding ARQ stage retransmission to the UE. This is the so-called the unsolicited ARQ retransmission at ARS side.

The process and advantages are same to the process and advantages of the unsolicited ARQ mechanism between BS and ARS which is mentioned before.

At this time, there could also be residual errors, for example L1 signaling errors such as NACK→ACK error, and as described below, this will be resolved by the passive ARQ process triggered by UE.

### 3. Passive ARQ process triggered by UE

The passive ARQ process triggered by the UE is used to solve the residual error, which is caused by the unsolicited ARQ processes mentioned before.

At the UE side, the re-ordering process is performed to locate the lost L2 PDU, possibly due to the following two reasons:
The first reason is that the residual error between ARS and UE. For example, the L1 signaling errors such as NACK→ACK error at the ARS side stop the required ARQ retransmission, but the corresponding L2 PDU is still buffered at the ARS.
The second reason is that the residual error between BS and ARS. Because of that error, corresponding L2 PDU is not buffered at ARS, but is still buffered it at the BS.

The UE generate the status report which indicates the lost L2 PDU, according to the re-ordering process, in order to require an ARQ retransmission which is the so-called passive ARQ process.

At the ARS side, after receiving the status report form the UE, the ARS should perform the following operations:
For those L2 PDU, lost by UE, which are still buffered at the ARS side, performing the ARQ retransmission. This is used to solve the residual error caused by NACK→ACK error at ARS side or by other errors. ARS flushes the corresponding L2 PDU buffer, received correctly by UE.

ARS re-generates reports and sends them to BS, according to the information from UE, indicating that the UE and ARS lose L2 PDU possibly caused by the residual error at BS side, in order to perform further ARQ retransmission.

At BS side, when received the status report, the BS performs corresponding L2 PDU ARQ retransmission and related buffer flush.

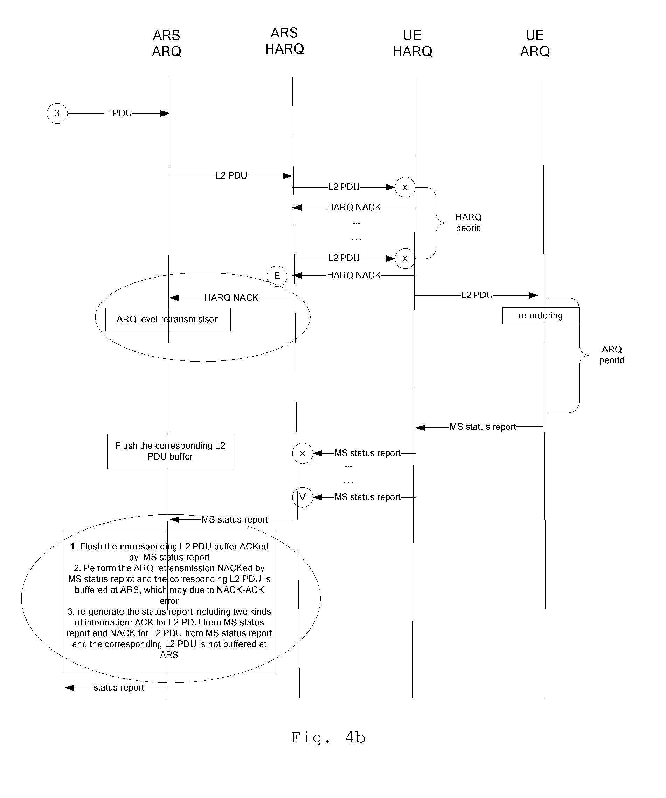

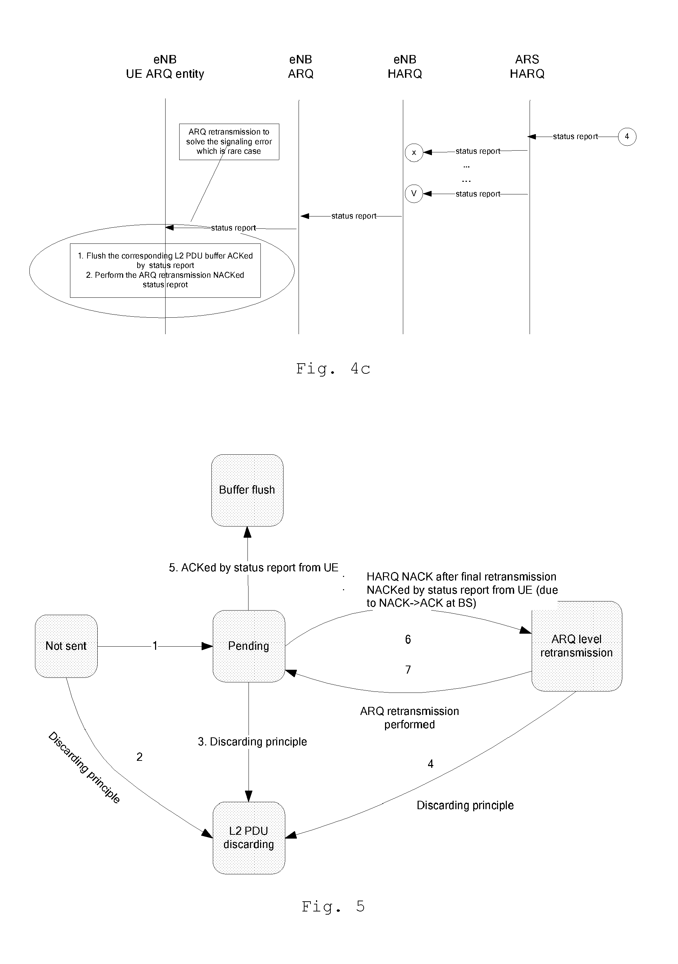

Fig. 4a to Fig. 4c are the schematic time sequence diagrams of the method, which performs the Down-Link ARQ process in relay-based wireless communication system, according to one embodiment of present invention.

The corresponding ARQ process based on L1 failure indication is described in Fig. 4a to Fig.4c, which should be continuous together. It is obvious that the earliest possible ARQ retransmission at BS side is at point D, and point E at ARS to UE, which is far earlier than that of the current 802.16J/D4. It is also clear that the status report over the Uu interface is greatly decreased. The Fig. 4a to Fig. 4c also show the residual error is resolved and hence no further residual error exist which helps to decrease the application lay retransmission.

Fig. 5 describes the state machine at the BS side. Shown as Fig. 5,
1: After the data was sent, the non-sent status is transferred to pending status, waiting for the response of the other side;
2: After the discard principle is meet, non-sent data is discarded;
3: After data at pending status meets the discard principle, that data is discarded;
4: After data at ARQ retransmission status meets the discard principle, that data is discarded;
5: After the pending data receives positive response, that data is cleared;
6: After the pending data receives the retransmission request, it is at ARQ retransmission status;
7 : After the data was ARQ retransmitted, it is at pending status again.

It should be noted that, the state machine at the ARS side is similar to the state machine at BS side.

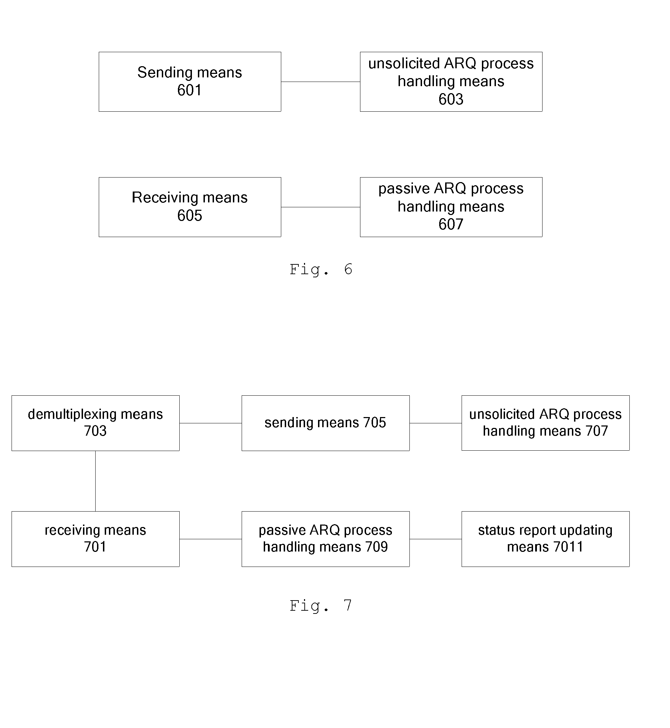

Fig. 6 is the structure diagram of the BS in a relay-based wireless communication system, according to the present invention.

Shown as Fig. 6, the BS according to present invention comprises: sending means 601, unsolicited ARQ process handling means 603, receiving means 605 and passive ARQ process handling means 607. The sending means 601 sends first data to a RS, the first data multiplexing second data for one or more terminal equipments. If the transmission of the first data fails, the unsolicited ARQ process to the RS is triggered by the unsolicited ARQ process handling means 603, to perform the retransmission for the first data. The receiving means 605 is used for receiving a status report sent from the RS for the passive ARQ process triggered by terminal equipment for the reception of the second data, wherein the status report indicates the second data, lost in the terminal equipment, that is not buffered in the RS. The passive ARQ process handling means 607 is used for retransmitting the second data, lost in terminal equipment, that is not buffered in RS, according to the status report received from the RS.

Fig. 7 is the structure diagram of the RS in a relay-based wireless communication system, according to the present invention.

Shown as Fig. 7, RS according to present invention comprises: sending means 701, demultiplexing means 703, sending means 705, unsolicited ARQ process handling means 707, passive ARQ process handling means 709, and status report updating means 7011. The sending means 701 receives first data from the BS, the first data multiplexing second data for one or more terminal equipments, and receives the status report from the terminal equipment indicating the lost second data, for the passive ARQ process triggered by terminal equipment for the reception of the second data. The demultiplexing means 703 demultiplexes the first data sent from the BS to generate the second data. The sending means 705 sends the demultiplexed second data to the terminal equipment. If the transmission of the second data fails, the unsolicited ARQ process handling means 707 triggers the unsolicited ARQ process to the terminal station to perform the retransmission of the second data. The passive ARQ process handling means 709 retransmits the second data, lost in terminal equipment, that is buffered in the RS, according to the status report received from the terminal equipment. The status report updating means 7011 generates a new status report according to the status report received from terminal equipment for the second data, lost in the terminal equipment, that is not buffered in that RS, to indicate the BS to retransmit the second data, lost in the terminal equipment, that is not buffered in the RS. In addition, benotedthat, the ARQ mechanism proposed by the invention can also be used for UL and other wireless communication system.

The present invention has the following advantages:
1) Shorted the transmission delay due to unsolicited ARQ mechanism;
2) Fast ARQ retransmission between BS and ARS caused by unsolicited manner at BS side;
3) Fast ARQ retransmission between ARS and UE caused by unsolicited manner at ARS side;
4) No re-ordering process at the ARS so that the forwarding to UE can be triggered right away;
5) Helps to resolve the delay issue introduced by relay concept to 3GPP system;
6) Passive ARQ mechanism triggered by UE, solves the residual errors such as those caused by NACK->ACK signaling error happened at BS and ARS; ARS performs the ARQ retransmission to solve the residual error happened at ARS; BS detects the residual error by the information from UE and resumes the corresponding ARQ retransmission.
7) Decreased status report transmission over the Uu interface, no unsolicited status report from ARS for the ARQ retransmission between BS and ARS; the NACK status report from UE only needs to cover small number of L2 PDU to solve the residual error left by the unsolicited ARQ process.
8) Simple ARS operation process due to no re-ordering is needed.
9) No SN is attached to TPDU which helps to decrease the header overhead over the Uu interface.

Although present invention is already shown above by combining the preferred embodiment of the present invention, those skilled in the art will understand, any modification, replacement and change may be made, without departing from the scope and spirit of the present invention. Hence, present invention should not be limited to the above embodiment, but should be limited by the appended claims and their equivalents.

## Claims

1. A method, in a relay-based wireless communication system, for performing downlink automatic retransmission request ARQ process, comprising:
a BS sends first data to a RS, the first data multiplexing second data for one or more terminal equipments;
If the transmission of the first data fails, unsolicited ARQ process to the RS is triggered by the BS, so as to perform the retransmission of the first data;
The RS demultiplexs the first data transmitted from the BS to generate the second data, and sends the demultiplexed second data to the terminal equipment; If the transmission of the second data fails, the unsolicited ARQ process to the terminal equipment is triggered by the RS, so as to perform the retransmission of the second data; and
The terminal equipment receives the second data and triggers a passive ARQ process for the reception of the second data.

2. A method according to claim 1, wherein the first data is tunnel protocol data unit TPDU, and the second data is link layer protocol data unit L2 PDU.

3. A method according to claim 1, wherein that the transmission of the first data fails is based on the final NACK feed back from the RS for the HARQ process between the BS and the RS or on instructions from higher layers;
And that the transmission of the second data fails is based on the final NACK feed back from terminal equipment for the HARQ process between the RS and the terminal equipment or on instructions from higher layers.

4. A method according to claim 1, wherein the passive ARQ process comprises:
The terminal equipment performs the reordering process for the second data received, to locate lost second data;
The terminal equipment produces a status report indicating the lost second data according to the re-ordering process; and
The terminal equipment feeds back the status report to the RS.

5. A method according to claim 4, wherein the passive ARQ process further comprises:
The RS retransmits the second data, lost in the terminal equipment, that is buffered in the RS,
according to the status report received from the terminal equipment; and
For the second data, lost in the terminal equipment, that is not buffered in the RS, the RS generates a new status report according to the status report received from the terminal equipment, to indicate the BS to retransmit the second data, lost in the terminal equipment, that is not buffered in the RS.

6. A method according to claim 5, wherein the passive ARQ process further comprises:
The BS retransmits the second data, lost in the terminal equipment, that is not buffered in that RS,
according to the new status report received from the RS.

7. A BS, in a relay-based wireless communication system, comprising:
sending means , used for sending first data to the RS, the first data multiplexes second data for one or more terminal equipments;
unsolicited ARQ process handling means, used for triggering the unsolicited ARQ process to the RS,
to perform the retransmission of the first data, if the transmission of the first data fails;
receiving means, used for receiving a status report sent from the RS for the passive ARQ process triggered by terminal equipment for the reception of the second data, wherein the status report indicates the second data, lost in the terminal equipment, that is not buffered in the RS; and
passive ARQ process handling means, used for retransmitting the second data, lost in terminal equipment, that is not buffered in RS, according to the status report received from the RS.

8. A BS according to claim 7, wherein the first data is tunnel protocol data unit TPDU, and the second data is link layer protocol data unit L2 PDU.

9. A BS according to claim 7, wherein that the transmission of the first data fails is based on the final NACK feed back from the RS for the HARQ process between the BS and the RS or on the instructions from higher layers.

10. A RS in a relay-based wireless communication system, comprising:
receiving means , used for receiving first data from the BS, the first data multiplexing second data for one or more terminal equipments, and used for receiving from the terminal equipment a status report indicating lost second data, for the passive ARQ process triggered by terminal equipment for the reception of the second data;
demultiplexing means, used for demultiplexing the first data sent from the BS to generate the second data;
sending means, used for sending the demultiplexed second data to the terminal equipment;
unsolicited ARQ process handling means, used for triggering the unsolicited ARQ process to the terminal station to perform the retransmission of the second data, if the transmission of the second data fails; and
passive ARQ process handling means, used for retransmitting the second data, lost in terminal equipment, that is buffered in the RS, according to the status report received from the terminal equipment.

11. A RS according to claim 10, wherein the first data is tunnel protocol data unit TPDU, and the second data is link layer protocol data unit L2 PDU.

12. A RS according to claim 10, wherein that the transmission of the second data fails is based on the final NACK feed back from the terminal equipment for the HARQ process between the RS and the terminal equipment or on the instructions from higher layers.

13. A RS according to claim 10, further comprising:
status report updating means, used for generating a new status report according to the status report received from terminal equipment for the second data, lost in the terminal equipment, that is not buffered in that RS, to indicate the BS to retransmit the second data, lost in the terminal equipment, that is not buffered in the RS.

14. A wireless communication system comprising a BS according to claim 7 and a RS according to claim 11.
